# EUROPEAN PATENT SPECIFICATION

(11) **EP 1 027 979 B1**
(45) Date of publication and mention of the grant of the patent: **02.04.2003**
(21) Application number: 98944288.4
(22) Date of filing: 29.09.1998
(51) Int. Cl.: B29C 47/02, B29C 47/54, B29C 45/54, B29C 47/50

(54) **METHOD FOR PREPARING A PANEL WITH A RESINOUS FRAME**
VERFAHREN ZUR HERSTELLUNG EINER PLATTE MIT EINEM KUNSTSTOFFRAHMEN
PROCEDE DE FABRIQUER UN PANNEAU AVEC UN CADRE EN MATIERE PLASTIQUE

(30) Priority: 30.09.1997 JP 26674197
(43) Date of publication of application: 16.08.2000
(73) Proprietor: Asahi Glass Co., Ltd., Tokyo 100-8405 (JP)
(72) Inventor: OKINO, Naoki Asahi Glass Company Ltd., Yokohama-shi Kanagawa 230-0045 (JP); ISHIKAWA, Yutaka Asahi Glass Company Ltd., Yokohama-shi Kanagawa 230-0045 (JP); TANAKA, Nobuyuki Asahi Glass Company Ltd., Yokohama-shi Kanagawa 230-0045 (JP); MANO, Yutaka Asahi Glass Company Ltd., Yokohama-shi Kanagawa 230-0045 (JP); SHIBUYA, Yasuhiro Asahi Glass Company Ltd., Aiko-gun Kanagawa 243-0301 (JP)
(74) Representative: Müller-Boré & Partner Patentanwälte
(86) International application number: JP9804362
(87) International publication number: WO99016606

(56) References cited:
- EP-A- 0 597 219
- DE-A- 3 843 342
- JP-A- 1 087 221
- JP-A- 6 087 146
- JP-A- 7 032 431
- JP-A- 9 039 063
- JP-A- 9 076 328
- JP-U- 2 111 516
- US-A- 4 217 635
- US-A- 5 421 940

## Description

### TECHNICAL FIELD

The present invention relates to a method for preparing a panel with a resinous frame, which is appropriate when a side and a corner of a glass sheet are required to have different output amounts of a resin material applied thereto as in a case wherein a glass sheet has a resinous frame unified to plural sides thereof.

### BACKGROUND ART

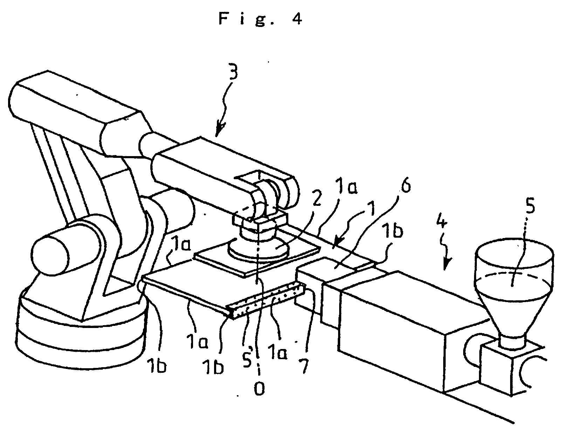

In Figure 4 is shown a perspective view of an example of a system for unifying a resinous bead to a periphery of a glass sheet. A glass sheet 1 is moved by a moving device 3 through a vacuum cup. The moving device 3 can carry out a positional shift of the glass sheet 1 and a rotational shift of the glass sheet 1 about an axis O perpendicular to the glass sheet. On the other hand, an extruder 4 extrudes a resinous material having a certain cross-sectional shape through a die 6 with a nozzle 7 having a certain cross-sectional shape. The glass sheet 1 has a resinous bead 5' unified to a periphery thereof by moving the glass sheet 1 by the moving device 3 so as to make the periphery of the glass sheet 1 (sides 1a and corners 1b) followed the nozzle 7.

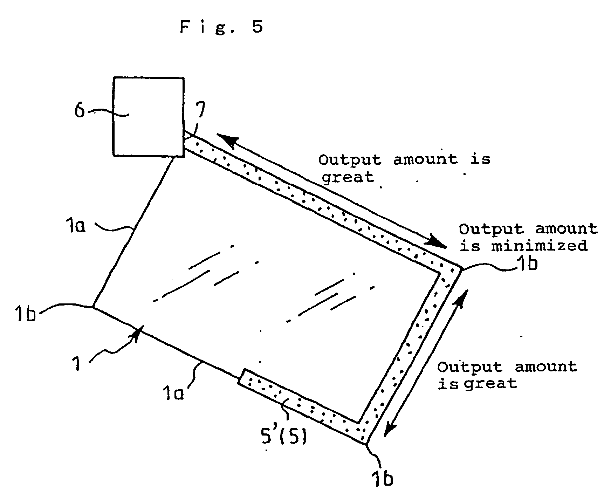

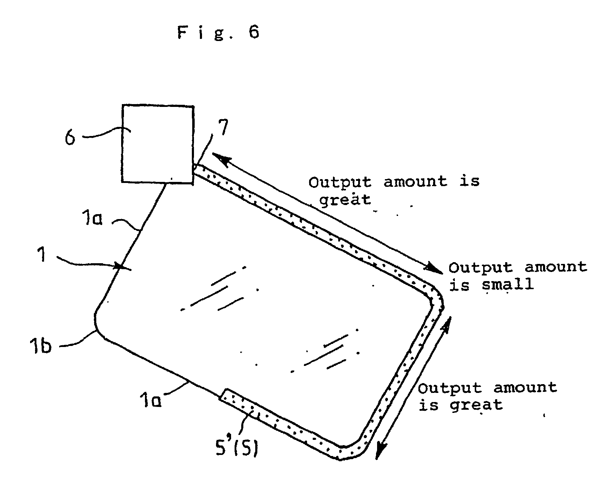

In Figures 5 and 6 are shown plan views of cases wherein the glass sheet 1 is moved by the moving device to continuously unify the bead 5' to the entire periphery of the glass sheet 1. The glass sheet 1 is shown to have the corners 1b formed in a rectangular shape in Figure 5, and the glass sheet 1 is shown to have the corners 1b formed in a circular arc shape in Figure 6. When the resinous bead 5' is unified to the sides 1a of the glass sheet 1, the operation can be carried out rapidly since the movement of the glass sheet 1 is linear. From this viewpoint, the output amount of the resinous material 5 for forming the bead 5' is great. On the other hand, with respect to the rectangular corners 1b, the positional shift of the glass sheet 1 is hold and the glass sheet 1 is rotated about the nozzle 7 when forming the bead on the corners 1b. In order to equalize the cross-sectional shapes of the bead 5' formed on the side 1a and the corners 1b, the output amount of the resinous material 5 onto the corners 1b with respect to a moving speed (in other words, an output amount per unit time; hereinbelow, the output amount means an output amount per unit time) is minimized.

In the case of the circular arc corners 1b as shown in Figure 6, the moving speed is reduced since the decelerated positional shift of the glass sheet 1 and the rotational shift of the glass sheet 1 are simultaneously carried out likewise. In order to equalize the cross-sectional shape of the bead 5', the output amount of a resinous material 5 onto the circular arc corners 1b with respect to the moving speed is required to be reduced.

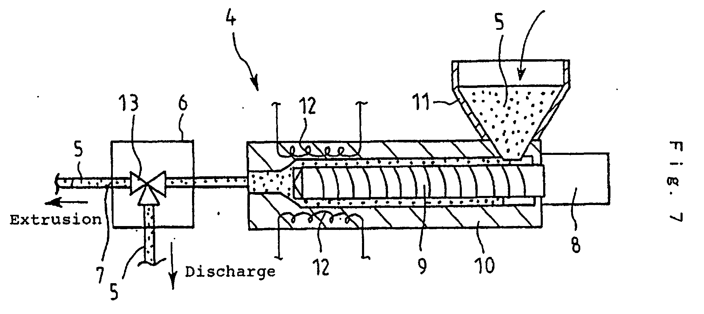

In Figure 7 is shown a cross-sectional view of an example of a conventional extruder 4. The extruder 4 includes a measuring screw 9 in a main body 10, which is rotated by an extruder drive 8. The resinous material 5 is supplied into the main body 10 through a resinous material hopper 11, which is provided on an upper portion of an end of the main body 10. The supplied resinous material 5 is heated by heaters 12 in the main body 10 to be softened. The heated and softened resinous material 5 is fed to the die 6 from the other end of the main body by the measuring screw 9. The resinous material 5 fed to the die 6 thus is extruded in a certain cross-sectional shape from the nozzle 7 of the die 6 through a switching valve 13 in the die 6.

In the extruder 4, the measuring screw 9 is rotated at a certain speed by the extruder drive 8 in order to stabilize the temperature of the extruded resinous material 5. When the bead 5' (Figures 5 and 6) is not formed on the glass sheet 1, the switching valve 13 is switched to discharge the entire amount of the fed resinous material 5 outside the system. When the output amount of the extruded resinous material is reduced, the switching valve 13 is switched to discharge a large portion of the fed resinous material 5 outside the system.

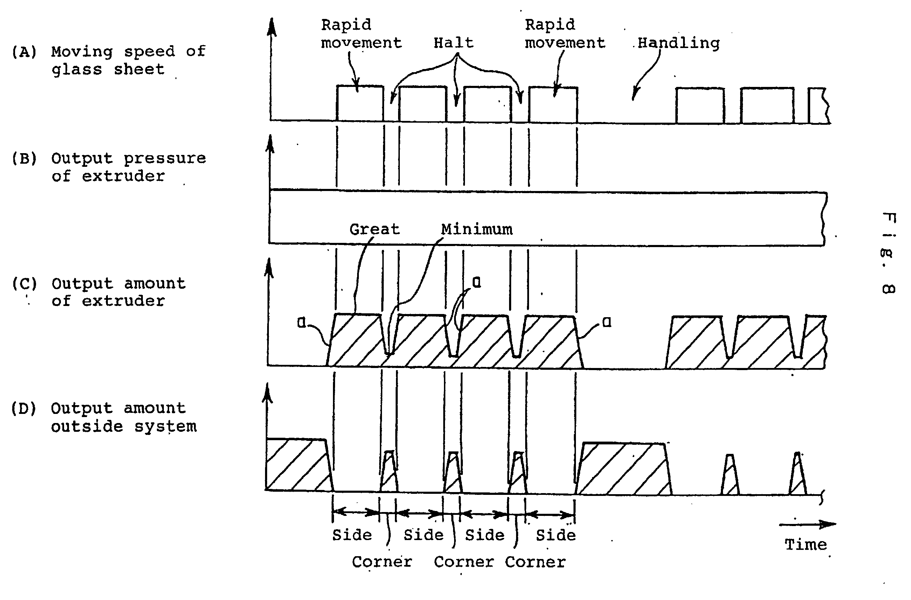

In Figure 8 is shown a graphical representation of relationships among a moving speed of the glass sheet (A), an output pressure from the extruder (B), an output amount from the extruder per unit time (C) and a discharge amount outside the system (D) wherein the extruder 4 of Figure 7 is employed to unify the resinous bead 5' to the glass sheet 1 having the rectangular corners 1b. The moving speed of the glass sheet is represented in a rectangular form in Figure 8 8 (A) since the movement and the halt of the glass sheet are carried out instantaneously. The output pressure of the extruder 4 is constant as shown in Figure 8 (B). When the bead is formed on the sides of the glass sheet, the output amount of the extruder (the output amount from the nozzle) is great as shown in Figure 8 (C) since the glass sheet is rapidly moved. When the bead is formed on the corners of the glass sheet, the output amount is minimized since the movement of the glass sheet is halted (though the glass sheet is rotated). Since the nozzle is open at that time, the pressure of the resinous material between the switching valve and the nozzle is released, and the actual output amount of the resinous material per unit time gently changes as indicated by "a" in Figure 8 (C). As a result, the resinous material is excessively fed to the glass sheet 1.

At a handling step for mounting the glass sheet on and dismounting the glass sheet through the moving device and at a step for forming the bead on the corners, the resinous material is discharged from the switching valve outside the system in a large amount as shown in Figure 8 (B).

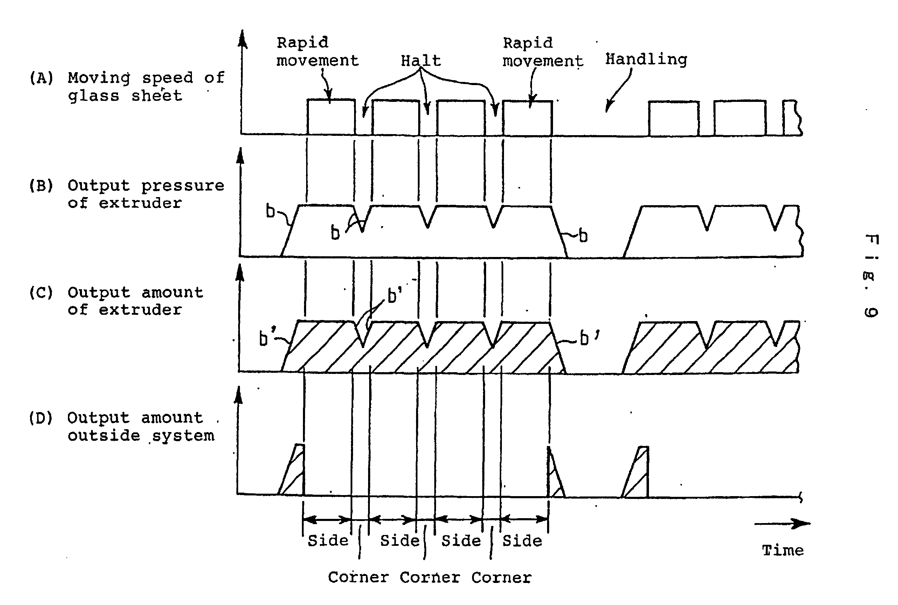

In order to solve the problem of the excessive supply, a proposal has been made to change the rotational speed of the measuring screw so as to control the output amount. In Figure 9 is shown a graphical representation of relationships among a moving speed of a glass sheet (A), an output pressure from an extruder (B), an output amount from the extruder per unit time (C) and a discharge amount outside the system (D) in a case wherein the rotational speed of the measuring screw is controlled to form a bead on the glass sheet with rectangular corners. When the rotational speed of the measuring screw is controlled so as to be matched to the moving speed of the glass sheet shown in Figure 9 (A), the output pressure of the extruder can be changed so as to be matched to the moving speed of the glass sheet as shown in Figure 9 (B). By halting the extrusion by the extruder in a handling operation, the discharge amount of the resinous material outside the system can be significantly reduced as shown in Figure 9 (D).

However, even it is difficult to instantaneously increase and decrease the output pressure of the extruder due to the presence of the inertia of the measuring screw as shown in Figure 9 (B) by controlling the rotational speed of the measuring screw (Figure 9 (B)). For this reason, the change in the output pressure becomes gentle as indicated by reference "b" in this Figure, and the output amount of the extruder changes gently as indicated in reference "b"' (Figure 9 (C)). Under the circumstances, the thickness of the bead 5' formed on the corners 1b has been greater than that of the bead 5' formed on the sides 1a since it is impossible to keep the output amount of the resinous material (the state shown in Figure 8 (C)) to a minimum when halting the glass sheet (when the bead 5' is formed on the corners 1b of Figure 5). In the case of the glass sheet 1 with the circular arc shaped corners 1b as shown in Figure 6, a similar problem has also been raised though the degree of the increased thickness is slightly reduced.

DE 38 43 343 A and EP-A-O 597 219 disclose a method for forming a resinous object wherein a resinous material is extruded from a die with a nozzle using an injection machine with a metering screw and a plunger provided upstream of the die whereby the injection machine injects the resinous material toward the die which extrudes the resinous material into a mould to press the resinous material into a certain shape.

US-A-5 421 940 discloses a method for preparing an automobile pane with a resinous frame wherein the resinous material for the frame is extruded from an extrusion head into a mould which carries the pane. The extrusion head enables the frame to be extruded directly onto the periphery of the pane, the shape of the frame being formed by the mould and the pane.

JP-A-09-039063 discloses a further method for preparing a panel with a resinous frame using a die which is relatively moved with respect to the edge of the panel. The resinous material is thereby extruded to a nozzle provided at the die and having a certain cross-sectional shape conforming to the cost-sectional shape of the nozzle. The injection amount of the resinous material is thereby controlled in response to a relative speed of the die to the panel by modifying the rotational speed of the metering screw forwarding the resinous material towards the die. However, this arrangement cannot control the supply amount of the resinous material at an optimum state.

US-A-4 217 635 discloses a control circuit adapted to control the movement of a pintle relative to the die head of an extrusion apparatus.

It is the object of the invention to provide a method for preparing a panel with a resinous frame in which an exact amount of resinous material is applied to the entire edge of the panel in order to prevent excess or insufficient resin material at any point of the edge of the panel.

The object is fulfilled by a method having the features disclosed in claim 1 and a method having the features disclosed in claim 3.

Preferred embodiments are defined in the dependent subclaims.

### BRIEF DESCRIPTION OF THE DRAWINGS

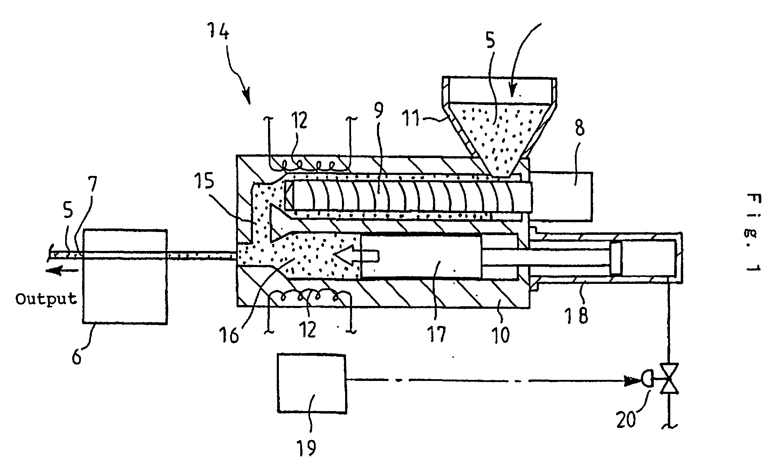

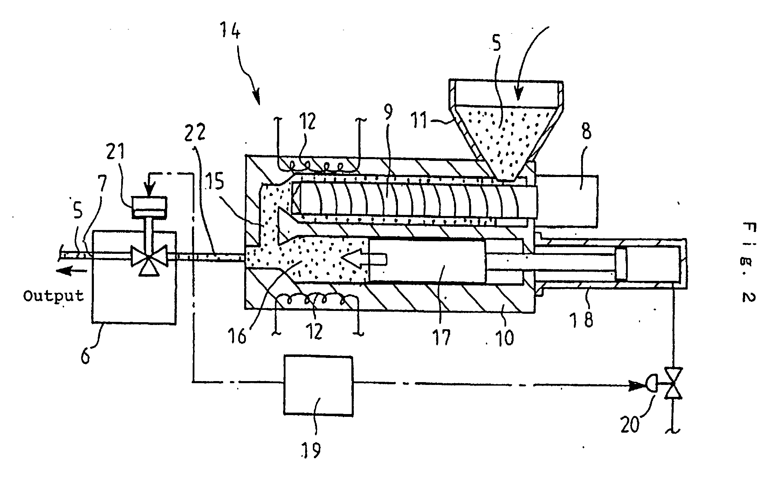

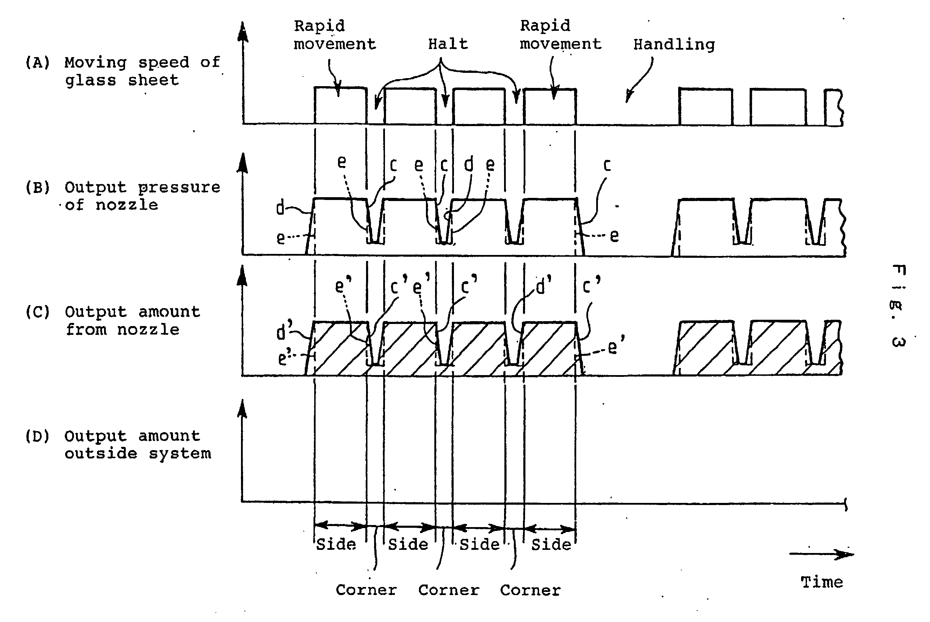

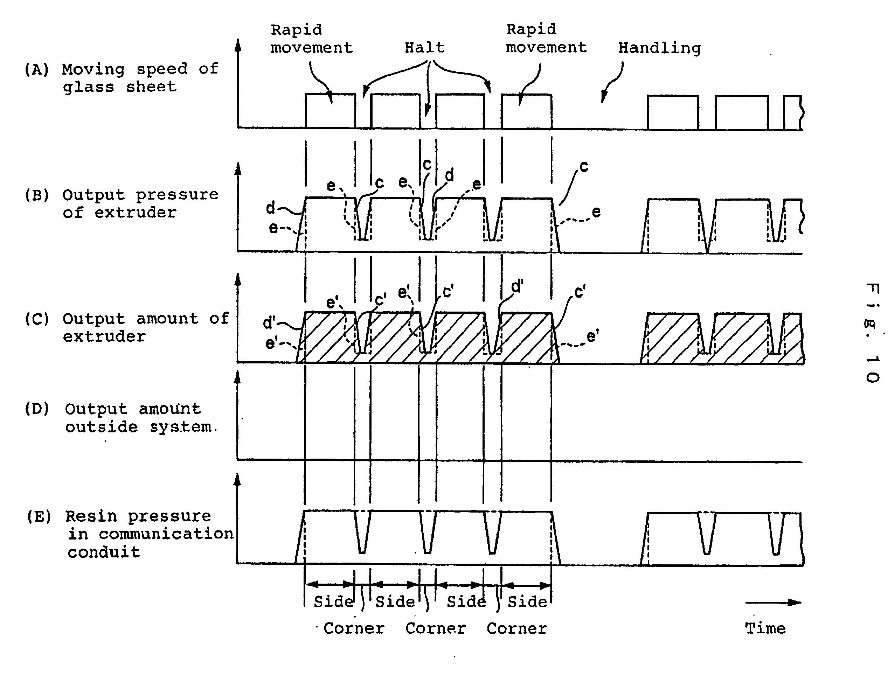

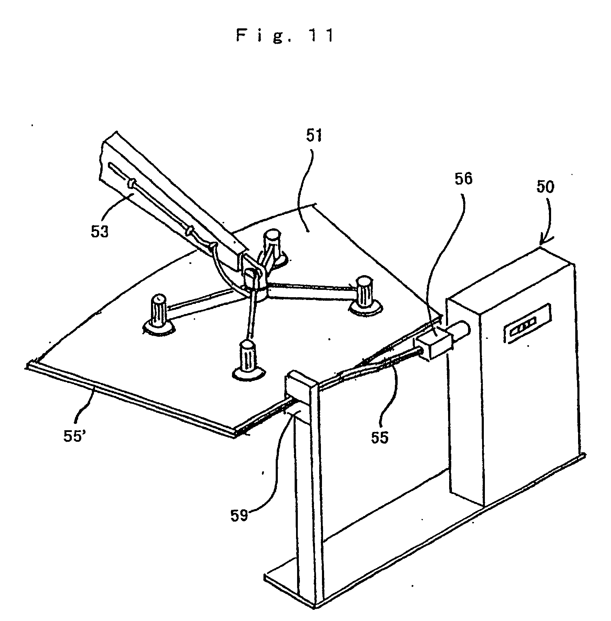

Figure 1 is a cross-sectional view showing an example of a system to practice the forming method according to the present invention; Figure 2 is a cross-sectional view showing another example of the system to practice the forming method according to the present invention; Figure 3 is a graphical representation showing relationships among a moving speed of a glass sheet (A), an output pressure from a nozzle (B), an output amount from the nozzle per unit time (C) and a discharge amount outside the system (D) in a forming method according to the present invention; Figure 4 is a perspective view explaining how a conventional extruder is employed to form a resinous bead on a glass sheet; Figure 5 is a plan view showing an example of the formation of the resinous bead on a glass sheet; Figure 6 is a plan view showing another example of the formation of the resinous bead on a glass sheet; Figure 7 is a cross-section view showing an example of a conventional extruder; Figure 8 is a graphical representation showing relationships among a moving speed of a glass sheet (A), an output pressure from an extruder (B), an output amount from the extruder per unit time (C) and a discharge amount outside the system (D) in the conventional extruder; Figure 9 is a graphical representation showing relationships among a moving speed of a glass sheet (A), an output pressure from an extruder (B), an output amount from the extruder per unit time (C) and a discharge amount outside the system (D) in the conventional extruder under another control; Figure 10 is a graphical representation showing relationships among a moving speed of a glass sheet (A), an output pressure from a nozzle (B), an output amount from the nozzle per unit time (C) and a discharge amount outside the system (D) in another forming method according to the present invention: and Figure 11 is an overall perspective view explaining how to unify a resinous molding on a glass sheet.

### BEST MODE FOR CARRYING OUT THE INVENTION

Now, preferred embodiments of the method for forming a resinous frame and the method for preparing a panel with a resinous frame according to the present invention will be described, referring to the accompanying drawings.

In Figure 1 is shown a cross-sectional view of an example of an injection machine, which is employed in the methods according to the present invention. The injection machine 14 includes a measuring screw 9 in a main body 10, which is rotated by a drive 8. A resinous material 5 is supplied through a resinous material hopper 11, which is provided on an upper portion of a right end of the main body 10. After supply, the resinous material 5 is heated and softened by heaters 12 provided in the main body 10. The measuring screw 9 feeds the heated and softened resinous material 5 to a plunger chamber 16 in the main body 9 through a conduit 15 at a left end of the main body. The plunger chamber 16 has a plunger 17 inserted therein. When the plunger 17 is moved in the right direction by an external hydraulic cylinder 18, the resinous material 5 is sucked into the plunger chamber 16 through the conduit 15. When the plunger 17 is moved in the left direction indicated by an arrow, the resinous material 5 is injected toward a die 6.

In this Figure, reference numeral 19 designates a controller, which controls a moving device, and which controls a control valve 20 for the hydraulic cylinder 18 of the plunger 17 so as to mate with the movement of a glass sheet by the moving device. The moving device and the movement of a glass sheet by the moving device with respect to the die may be similar to those shown in Figure 4. In this embodiment, the extruder 4 shown in Figure 4 is replaced by the injection machine 14. The drive for the plunger 17 may be an AC servomotor or a similar device in place of the hydraulic cylinder 18.

The process wherein the injection machine 14 of Figure 1 is employed to form a bead 5' on sides 1a and corners 1b of a glass sheet (Figure 5) will be explained. The measuring screw 9 is rotated at a certain speed. The resinous material 5 on the measuring screw 9 is sucked, through the conduit 15, into the plunger chamber 16 by moving the plunger 17 in the right direction. The suction by the plunger 17 is carried out when the glass sheet is mounted on and dismounted from the moving device (a handling process shown in Figure 3 (A)).

When the plunger 17 is moved in the direction indicated by the arrow, the resinous material 5 is injected into the die 6, and the resinous material is delivered on the glass sheet through a nozzle 7, having a certain cross-sectional shape. When the periphery of the glass sheet is moved along the nozzle 7 while advancing the plunger 17, the resinous material 5 is formed on the periphery of the glass sheet as a bead unified to the periphery, having the certain cross-sectional shape.

When the glass sheet is continuously moved, a corner of the glass sheet arrives at the nozzle 7. On arrival, the positional shift of the glass sheet is halted to prevent the position of the glass sheet with respect to the nozzle from changing. Then, the glass sheet is rotated about the nozzle 7. If the output amount of the resinous material from the nozzle per unit time is changed, the supply of the resinous material becomes excessive since the glass sheet is halted. From this viewpoint, the advance of the plunger 7 is halted to prevent the resinous material 5 from being supplied to the die 6, Thus, the output of the resinous material can be carried out so as to match with the positional state of the glass sheet since the advance of the plunger 17 can be instantaneously stopped as in the movement of the glass sheet.

When the formation of the bead on the corner of the glass sheet is completed, a rapid movement of the glass sheet starts to form the bead on a side of the glass sheet. The advance of the plunger in the direction indicated by the arrow restarts in response to the start of the rapid movement. In this case, the output of the resinous material can be carried out so as to match with the positional state of the glass sheet since the advance of the plunger 17 can instantaneously start as in the movement of the glass sheet.

In Figure 3 is shown a graphical representation of relationships among a moving speed of the glass sheet (A), an output pressure form the nozzle (B), an output amount from the nozzle per unit time (C) and a discharge amount outside the system (D) in a case wherein the glass sheet 1 has rectangular corners 1b formed with the bead 5' by the injection machine 14. When the plunger 17 is operated to change the output pressure from the nozzle as shown in Figure 3 (B) so as to match with the movement of the glass sheet shown in Figure 3 (A), the output amount from the nozzle per unit time is controlled as shown in Figure 3 (C). When the plunger 17 is activated to provide the die 6 with the resinous material 5 in a amount necessary and sufficient to form the bead 5' on the glass sheet 1, the process can be carried out without discharging the resinous material outside the system (Figure 3 (D)).

In the injection machine 14 of Figure 1, the pressure of the resinous material 5 in the plunger chamber 16 gradually reduces when the plunger 17 is switched from an injected state to the halt of injection or a decrease in the injection amount (Figure 3 (B) "c"). As a result, the output amount from the nozzle 7 becomes excess due to the presence of the residual pressure in the plunger chamber 16 (Figure 3 (C) "c'"). When the injection starts from the halt of injection, there is a time lag, which is required to increase the pressure of the resinous material 5 in the vicinity of the nozzle 7. By the time lag, the output pressure from the nozzle gently increases as indicated by reference "d" in Figure 3 (B), and consequently the output amount from the nozzle gently increases as indicated by reference d' in Figure 3 (C) .

In order to cope with this problem, it is proposed that the plunger 17 be slightly withdrawn in the direction opposite to the injection direction to decrease the residual pressure in the plunger chamber 16 when switching from the injected state to the halt of injection or a small amount of injection. Or, it is proposed that the plunger 17 be moved at a speed higher than the certain speed to shorten the time required for raising the pressure of the resinous material 5 when starting the injection after the halted state. By either one of the measures, the output pressure from the nozzle can be controlled as indicated by dotted lines "e" in Figure 3 (B) to avoid the occurrence of the excess output of the resinous material from the nozzle 7, enabling to resume the injection promptly (dotted lines "e'" in Figure 3 (C)).

In Figure 2 is shown a cross-sectional view of another example of the injection machine applicable to the methods according to the present invention. There is provided a resin flow controller 21, such as a switching valve and a gear pump, between the nozzle 7 of the die 6 and the plunger 17 (in the die 6 in the example shown in Figure 2). The controller 19 also controls the resin flow controller 21 so as to match the resin flow controller with the movement of a glass sheet by the moving device as well as controls the control valve 20 for the hydraulic cylinder 18 of the plunger 17.

In the injection machine 14 shown in Figure 2, the movement of the plunger 17 and the resin flow controller 21 are interrelatedly controlled so as to match with the movement of the glass sheet. In this case, the resin pressure in a communication conduit 22 between the injection machine 14 and the resin flow controller 21 is held substantially constant. When the movement of the plunger 17 is halted or decelerated, the resin pressure in the plunger chamber 16 gradually reduces as stated earlier. By using the resin flow controller 21 to decrease the size of the conduit leading to the nozzle 7 when halting or decelerating the movement of the plunger, the resin pressure in the communication conduit 22 can not be prevented from reducing even if the amount of the resin material to be injected becomes small. By balancing the flow of the resinous material 5 to be injected and the opening degree of the resin flow controller 21, the resin pressure in the communication conduit 22 can be held substantially constant (When the flow of the resinous material 5 to be injected is decreased, the opening degree of the communication conduit is decreased by the resin flow controller 21).

This process is shown in Figure 10 (E). The glass sheet, which has been rapidly moved, is halted (Figure 10 (A)). If the resin flow controller 21 is not activated (a solid line in Figure 10 (E)), the output pressure from the nozzle 7 gradually reduces (reference "c" in Figure 10 (B)) since the resin pressure is residual in the die 6 even after having halted the plunger 17. The gradual reduction in the output pressure causes the output amount from the nozzle 7 per unit time to gradually reduce (reference "c'" in Figure 10 (C)).

Conversely, when the resin flow controller 21 is activated, the excess output of the resin material can be restrained (reference "e'" in Figure 10 (C)) since a shutdown is formed between the nozzle 7 and the die 6 where the resin pressure is residual. When the formation of the bead on a side of the glass sheet restarts after having completed the formation of the bead on the preceding corner of the glass sheet, the resin pressure in the communication conduit is held constant (dotted lines in Figure 10 (E)). As a result, when the plunger 17 is advanced in the direction indicated by the arrow, the resin material can be promptly delivered from the nozzle (reference "e'" in Figure 10 (C)) since the resin pressure has been held at a level sufficient to inject the certain flow.

In the examples stated earlier, the resin material, which is fed to the die from the injection machine, is directly formed on the periphery of the glass sheet. The method for forming a resin frame according to the present invention can also be applied to press a formed resin frame on the periphery of a glass sheet just after having extruded the resin material in a certain cross-sectional shape. An example of the resin frame formed by the pressing method is one called a molding, which is interposed between a glass plate for automobile windows and a window opening of a vehicle body. The reason why the method according to the present invention is appropriate to the foundation of the molding is as follows:

When such a molding is provided on an exterior side of an automobile, the molding is required to have not only dimensional accuracy but also good appearance. When the resinous frame is formed directly on the periphery of a glass sheet, the vibration of the injection machine can have an adverse effect on a surface of the molding, degrading the appearance thereof. From this viewpoint, the method for pressing a formed resin frame on the periphery of a glass sheet is effective as a method for unifying a resin frame to a glass plate for automobile windows.

When the molding is unified to the corners of a glass plate for automobile windows, the moving speed of the glass plate is reduced as in the embodiments as stated earlier. If the extruder is employed to extrude a resinous material without taking any measures, the excess output of the resinous material occurs as stated earlier. The molding is required to have high dimensional accuracy since it is unified to the periphery of a glass plate and mounted to a window opening of a vehicle body. The presence of an error in the cross-sectional shape of a molding, which is caused by even slight excess output, has a great advance effect on accuracy of assembling a glass plate for automobile windows to a vehicle body.

The corners of a glass plate for automobile windows are usually rounded to some extent. The radius of curvature of the corners ranges from about 80 mmR or more at the maximum to a few mmR at the minimum. If the radius of curvature is about 50 mmR, a molding can be unified to the corners of the glass plate by extruding a resinous material while relatively moving the glass plate and the die for extruding a resinous material. However, if the glass plate has corners of a radius of curvature of 50 mmR or less, or about a few mmR in extreme case, the shape of the molding fails to be stable on the following reasons. As stated earlier, the relative moving speed between the glass plate and the die (the pressing member in this example) is accelerated and decelerated in the vicinity of a corner. In case of a normal extruder, the control of the output amount of a resinous material fails to follow the acceleration and deceleration as in case of a rectangular corner. Under the circumstances, when the relative moving speed decelerates, the resinous material is excessively delivered in comparison with the decelerated relative moving speed, and when the relative moving speed increases, the output amount of the resinous material fails to increase in comparison with the accelerated relative moving speed. As a result, the formed molding can not have a desired cross-sectional shape, degrading the assembling accuracy. In order to prevent the assembling accuracy from degrading, an additional step has been required to unify the molding to the corners (disclosed in, e.g., USP 5,316,829 and USP 5,456,874). The application of the method for forming a resinous frame according to the present invention to the unification of a molding to a glass plate for automobile windows, in particular the application of the method to the unification of a molding to a glass plate having corners formed in a radius of curvature of 50 mmR or less, is effective since there is no need for an additional step.

A method for pressing a formed resinous frame on the periphery of a glass plate for automobile windows just after having extruded a resinous material so as to have a certain cross-sectional shape has been disclosed in USP 5,795,421. The summary of this method will be explained, referring to Figure 11. A resinous frame forming system 50 has the injection machine shown in Figure 1 or 2 incorporated thereinto. The resinous frame forming system 50 has a leading edge provided with a die 56 having a nozzle. A resinous material 55, which has been delivered in a certain cross-sectional shape from the die 56, is drawn into a pressing member 59, which is fixed at a location apart from the die by a certain distance. The pressing member 59 has a hollow portion formed therein so as to substantially conform to the cross-sectional shape of the formed resinous material 55. The formed resinous material 55 and a glass plate 51 are inserted together into the hollow portion. Thus, the formed resinous material 55 is pressed onto the periphery of the glass plate 51 to be unified to the periphery of the glass plate 51 as a molding 55'. In this method, the glass plate 51 is supported by a moving device 53, and the periphery of the glass plate 51 is moved along the pressing member 59 under the action of the moving device 53.

The resinous frame forming system 50 has the injection machine shown in Figure 1 or 2 incorporated thereinto. The operation for unifying a molding to a glass plate for automobile windows by using the injection machine will be explained. When the molding 55' is unified to sides of the glass plate 51, the glass plate 51 is rapidly moved, having a corresponding side thereof moved along the pressing member 59. In this case, the advance of the plunger injects the resinous material into the die 56, and the resinous material is delivered from the nozzle.

When a corner of the glass plate 51 approaches the pressing member 59, the movement of the glass plate 51 is decelerated. The movement of the plunger is also decelerated so as to match with the decelerated movement of the glass pane. Thus, the resinous material to be fed to the die 56 is reduced to decrease the output amount of the resinous material to be delivered from the nozzle. Suppose that the output amount per unit time for unifying a molding to a corner of the glass plate is the same as that for unifying the molding to a side of the glass plate, the resinous material is excessively delivered into between the pressing member 59 and the die 6. When the molding is unified to a corner while the glass plate 51 is rotating about the pressing member 59, the output amount of the resinous material per unit time, which is delivered to the glass plate, is reduced in order to cope with this problem.

When the unification of the molding to a corner is completed, the unification of the molding to the succeeding side starts. In order to match with an increase in the moving speed of the glass plate during forming the molding to the side, the output amount of the resinous material per unit time, which is delivered from the nozzle, is increased. In this case, the plunger can be rapidly advanced to extrude the resinous material, injecting the resinous material toward the die 6 with good response.

The variation in the resin pressure in the communication conduit, which is caused by the movement of the plunger, can be restrained by the resin flow controller as stated earlier (see Figure 2).

The present invention is not limited to the embodiments stated earlier. An example of a panel to have the resinous frame unified thereto is a transparent synthetic resin panel in addition to a glass sheet, for instance. Examples of the glass sheet include a single glass sheet, laminated glass with plural glass sheets laminated through synthetic resin intermediate films, insulating glass with plural glass sheets and air layers alternately provided, and so on. The panel can have various shapes, depending on applications of the panel. As illustrated, the corners may have a rectangular shape, a round shape or an unrectangular but angular shape. The panel may be a flat plate or a curved plate.

The formed resinous frame includes one generally called a bead or a glazing channel for building windows, and one called a molding or a gasket for automobile glass plates. The molding includes one unified to the entire periphery of a glass sheet, and one unified to a single side of a glass sheet or a side including plural corners of a glass sheet. The shape of a molding includes one unified to an interior side surface, end surfaces and an exterior side surface of a glass sheet, one unified to either one of the interior side surface and the interior side surface, and one unified to the end surfaces and either one of the interior side surface and the interior side surface.

The forming method for a molding includes a method carrying out the unification by performing the pressing just after having completed the extrusion, and a method for unifying a resinous material delivered from the nozzle directly to a glass sheet. In particular, the method according to the present invention preferably applies to a molding that is not extensively exposed on an exterior side of a vehicle and that is formed so as to be unified on an interior side of the vehicle.

The relative movement between a glass sheet and the die or the pressing member may be carried out by moving the die or the pressing member or moving the glass sheet, or by moving both facing members alternately or simultaneously.

### INDUSTRIAL APPLICABILITY

As explained, the present invention can employ the injection machine to extrude a resinous frame, significantly decreasing the discharge of the resinous material outside the system. In particular, the unification of a resinous frame to a corner, which has been difficult to carry out, becomes possible when a glass sheet and the die (or the pressing member) are relatively moved to unify the resin frame to the periphery of the glass sheet while extruding the resinous material from the die. In this case, a unified portion of the resinous frame is subjected to different relative moving speeds at a side of a glass sheet and at a corner of the glass sheet. Even if the output amount of the resinous material per unit time is abruptly changed so as to match with a change in the relative moving speed, the resinous frame can be integrally formed so as to continuously have a certain cross-sectional shape on both sides and corners.

## Claims

1. A method for preparing a panel with a resinous frame, wherein while relatively moving a die (6) for extruding a resinous material and a peripheral edge of a panel, a resinous material is extruded through a nozzle (7) provided in the die (6) and having a certain cross-sectional shape, and the extruded resinous material (5) is formed on the peripheral edge of the panel so as to have a certain cross-sectional shape substantially conforming to the cross-sectional shape of the nozzle (7), wherein an injection machine (14) is provided on an upstream side of the die (6), and a resinous material (5). which is supplied through a resinous material hopper (11) of the injection machine (14), is fed into a plunger chamber (16) of the injection machine (14) by a metering screw (9) at a certain amount, and while controlling an injection amount of the resinous material (5) in response to a relative moving speed between a peripheral edge of the panel and the die (6), the resinous material (5) fed into the plunger chamber (16) is injected toward the die (6) by a plunger (17) to be extruded onto the peripheral edge of the panel through the nozzle (7) of the die (6) whereby when a portion of the panel facing the die (6) transfers from a side of the panel onto a comer of the panel, the relative moving speed between the panel and the die (6) is reduced,- a moving speed of the plunger (17) is reduced in response to the reduction in the relative moving speed to decrease an output amount from the nozzle (7) per unit time, and when the portion of the panel facing the die (6) transfers from the comer of the panel onto another side of the panel, the relative moving speed between the panel and the die (6) is raised, the moving speed of the plunger (17) is raised in response to the raise in the relative moving speed to increase the output amount from the nozzle (7) per unit time.

2. The method for preparing a panel with a resinous frame according to Claim 1, wherein a resinous material flow controller (21) is provided between the injection machine (14) and the nozzle (7), and the resinous material flow controller (21) is employed to restrain an excess discharge in response to the relative moving speed between the panel and the die (6).

3. A method for preparing a panel with a resinous frame unified to a peripheral edge thereof wherein a resinous material (55) is extruded from a die (56) with a nozzle having a certain cross-sectional shape to be formed so as to have a certain cross-sectional shape substantially conforming to the cross-sectional shape of the nozzle, the extruded and formed resinous material (55) is drawn into a pressing member (59), and wherein while relatively moving a panel and the pressing member (59) so that the pressing member (59) moves along a peripheral edge of the panel, the extruded and formed resinous material (55) is unified to the peripheral edge by the pressing member (56), wherein an injection machine (14) is provided on an upstream side of the die (56), and a resinous material (55), which is supplied through a resinous material hopper (11) of the injection machine (14), is fed into a plunger chamber (16) of the injection machine (14) by a metering screw (9) at a certain amount, while controlling an injection amount of the resinous material (55) in response to a relative moving speed between a peripheral edge of the panel and the die (56), the resinous material (55) fed into the plunger chamber (16) is injected toward the die (56) by a plunger (17) to be extruded onto the peripheral edge of the panel through the nozzle of the die (56), whereby when a portion of the panel facing the pressing member (59) transfers from a side of the panel onto a comer of the panel, the relative moving speed between the panel and the pressing member (59) is reduced, a moving speed of the plunger (17) is reduced in response to the reduction in the relative moving speed to decrease an output amount from the nozzle (7) per unit time, and when the portion of the panel facing the pressing member (59) transfers from the comer of the panel onto another side of the panel, the relative moving speed between the panel and the pressing member (59) is raised, the moving speed of the plunger (17) is raised in response to the raise in the relative moving speed to increase the output amount from the nozzle (7) per unit time.

4. The method for preparing a panel with a resinous frame according to Claim 3, wherein a resinous material flow controller (21) is provided between the injection machine (14) and the nozzle (7), and the resinous material flow controller (21) is employed to restrain an excess discharge in response to the relative moving speed between the panel and the pressing member.

## Patentansprüche

1. Verfahren zur Herstellung einer Platte bzw. eines Paneels mit einem harzartigen Rahmen, worin, während ein Stempel (6) zum Extrudieren eines harzartigen Materials und einer Umfangskante bzw. eines Umfangsrands einer Platte relativ bewegt wird, ein harzartiges Material durch eine Düse (7), die in dem Stempel (6) vorgesehen ist und eine bestimmte Querschnittsform aüfweist, extrudiert wird und das extrudierte harzartige Material (5) an der Umfangskante der Platte so ausgebildet wird, daß es eine bestimmte Querschnittsform besitzt, die im wesentlichen mit der Querschnittsform der Düse (7) übereinstimmt, worin eine Spritz- bzw. Einspritz- bzw. Spritzgußmaschine (14) an einer stromaufwärtigen Seite des Stempels (6) vorgesehen wird, und ein harzartiges Material (5), welches durch einen Harzmaterialtrichter (11) der Spritzgußmaschine (14) zugeführt wird, in eine Plungerkolben- bzw. Kolbenkammer (16) der Spritzgußmaschine (14) durch eine Dosierschnecke bzw. -schraube (9) in einer bestimmten Menge zugeführt wird, und während eine Spritzgußmenge des harzartigen Materials (5) in Antwort auf eine relative Bewegungsgeschwindigkeit zwischen einer Umfangskante der Platte und dem Stempel (6) gesteuert bzw. geregelt wird, das in die Kolbenkammer (16) zugeführte harzartige Material (5) zu dem Stempel (6) durch einen Plungerkolben (17) eingespritzt wird, um auf die Umfangskante der Platte durch die Düse (7) des Stempels (6) extrudiert zu werden, wobei, wenn ein Bereich der Platte, der dem Stempel (6) zugewandt ist, sich von einer Seite der Platte zu einer Ecke der Platte verlagert, die relative Bewegungsgeschwindigkeit zwischen der Platte und dem Stempel (6) reduziert wird, eine Bewegungsgeschwindigkeit des Plungerkolbens (17) in Antwort auf die Reduktion der relativen Bewegungsgeschwindigkeit verringert wird, um eine Ausgabemenge aus der Düse (7) pro Zeiteinheit zu verringern, und wenn der Bereich der Platte, der dem Stempel (6) zugewandt ist, sich von der Ecke der Platte zu einer anderen Seite der Platte verlagert, die relative Bewegungsgeschwindigkeit zwischen der Platte und dem Stempel (6) erhöht wird, die Bewegungsgeschwindigkeit des Plungerkolbens (17) in Antwort auf den Anstieg der relativen Bewegungsgeschwindigkeit aufgehoben wird, um die Ausgabemenge von der Düse (7) pro Zeiteinheit zu erhöhen.

2. Verfahren zur Herstellung einer Platte mit einem harzartigen Rahmen nach Anspruch 1, worin eine Flußsteuer- bzw. Flußregeleinheit (21) für harzartiges Material zwischen der Spritzgußmaschine (14) und der Düse (7) vorgesehen und die Flußsteuer- bzw. Flußregeleinheit (21) für harzartiges Material angewandt wird, um einen übermäßigen Austrag in Antwort auf die relative Bewegungsgeschwindigkeit zwischen der Platte und dem Stempel (6) zu beschränken.

3. Verfahren zur Herstellung einer Platte bzw. eines Paneels mit einem harzartigen Rahmen, der mit einer Umfangskante derselben einstückig gemacht wird, worin ein harzartiges Material (55) von einem Stempel (56) mit einer Düse, die eine bestimmte Querschnittsform aufweist, extrudiert wird, um so ausgebildet zu werden, daß sie eine bestimmte Querschnittsform besitzt, die im wesentlichem mit der Querschnittsform der Düse übereinstimmt, das extrudierte und geformte harzartige Material (55) in ein Druckglied (59) gezogen wird, und worin, während sich eine Platte und das Druckglied (59) zueinander relativ bewegen, so daß das Druckglied (59) sich entlang einer Umfangskante der Platte bewegt, das extrudierte und geformte harzartige Material (55) mit der Umfangskante durch das Druckglied (56) vereinigt wird, worin eine Spritz- bzw. Einspritz- bzw. Spritzgußmaschine (14) an einer stromaufwärtigen Seite des Stempels (56) vorgesehen ist, und ein harzartiges Material (55), welches durch einen Harzmaterialtrichter (11) der Spritzgußmaschine (14) zugeführt wird, in eine Plungerkolben- bzw. Kolbenkammer (16) der Spritzgußmaschine (14) durch eine Dosierschraube bzw. - schnecke (9) in einer bestimmten Menge zugeführt wird, während eine Einspritzmenge des harzartigen Materials (55) in Antwort auf eine relative Bewegungsgeschwindigkeit zwischen einer Umfangskante der Platte und dem Stempel (56) gesteuert bzw. geregelt wird, das harzartige Material (55), das in die Kolbenkammer (16) zugeführt wird, zu dem Stempel (56) durch einen Plungerkolben (17) eingespritzt wird, um auf die Umfangskante der Platte durch die Düse des Stempels (56) extrudiert zu werden, wobei, wenn ein Bereich der Platte, der dem Druckglied (59) zugewandt ist, sich von einer Seite der Platte zu einem Eck der Platte verlagert, die relative Bewegungsgeschwindigkeit zwischen der Platte und dem Druckglied (59) reduziert wird, eine Bewegungsgeschwindigkeit des Plungerkolbens (17) in Antwort auf die Reduktion in der relativen Bewegungsgeschwindigkeit reduziert wird, um eine Ausgabemenge von der Düse (7) pro Zeiteinheit zu reduzieren, und wenn der Bereich der Platte, der dem Druckglied (59) zugewandt ist, sich von der Ecke der Platte auf eine andere Seite der Platte verlagert, die relative Bewegungsgeschwindigkeit zwischen der Platte und dem Druckglied (59) angehoben wird, die Bewegungsgeschwindigkeit des Plungerkolbens (17) in Antwort auf den Anstieg in der relativen Bewegungsgeschwindigkeit angehoben wird, um die Ausgabemenge von der Düse (7) pro Zeiteinheit zu erhöhen.

4. Verfahren zur Herstellung einer Platte mit einem harzartigen Rahmen nach Anspruch 3, worin eine Flußsteuer- bzw. Flußregeleinheit (21) für harzartiges Material zwischen der Spritzgußmaschine (14) und der Düse (7) vorgesehen und die Flußsteuer- bzw. Flußregeleinheit (21) für harzartiges Material angewandt wird, um einen übermäßigen Austrag in Antwort auf die relative Bewegungsgeschwindigkeit zwischen der Platte und dem Druckglied zu beschränken.

## Revendications

1. Procédé pour préparer un panneau comportant un cadre en résine, dans lequel, pendant un déplacement relatif d'une filière (6) destinée à extruder une matière résineuse et d'un bord périphérique d'un panneau, une matière résineuse est extrudée à travers un ajutage (7) prévu dans la filière (6) et ayant une certaine forme en coupe transversale, la matière résineuse extrudée (5) étant formée sur le bord périphérique du panneau de façon à présenter une configuration en coupe transversale sensiblement conforme à la configuration en coupe transversale de l'ajutage (7), et dans lequel une machine d'injection (14) est prévue du côté amont de la filière (6), une matière résineuse (5), délivrée par l'intermédiaire d'une trémie de matière résineuse (11) de la machine d'injection (14), est introduite dans une chambre à piston (16) de celle-ci par une vis de dosage (9) suivant un certain débit et, tandis qu'un débit d'injection de la matière résineuse (5) est régulé en réponse à une vitesse de déplacement relatif entre un bord périphérique du panneau et la filière (6), la matière résineuse (5) introduite dans la chambre à piston (16) est injectée vers la filière (6) par un piston (17) pour être extrudée sur le bord périphérique du panneau à travers l'ajutage (7) de la filière (6), pour qu'ainsi, au moment du passage d'une partie du panneau tournée vers la filière (6), d'un côté à un coin dudit panneau, la vitesse de déplacement relatif entre le panneau et la filière (6) soit réduite, et qu'une vitesse de déplacement du piston (17) soit réduite en réponse à la réduction de la vitesse de déplacement relatif, afin de diminuer le débit de sortie de l'ajutage (7) par unité de temps, et qu'au moment du passage de la partie du panneau tournée vers la filière (6), du coin à un autre côté du panneau, la vitesse de déplacement relatif entre le panneau et la filière (6) soit augmentée et que la vitesse de déplacement du piston (17) soit augmentée en réponse à l'augmentation de la vitesse de déplacement relatif, afin d'augmenter le débit de sortie de l'ajutage (7) par unité de temps.

2. Procédé pour préparer un panneau comportant un cadre en résine selon la revendication 1, dans lequel un dispositif régulateur de débit de matière résineuse (21) est prévu entre la machine d'injection (14) et l'ajutage (7), le dispositif régulateur de débit de matière résineuse (21) servant à empêcher une décharge excessive en réponse à la vitesse de déplacement relatif entre le panneau et la filière (6).

3. Procédé pour préparer un panneau comportant un cadre en résine rendu solidaire de son bord périphérique, dans lequel une matière résineuse (55) est extrudée à partir d'une filière (56) comportant un ajutage ayant une certaine forme en coupe transversale, de façon à présenter une configuration en coupe transversale sensiblement conforme à la configuration en coupe transversale de l'ajutage, la matière résineuse (55) extrudée et configurée étant introduite dans un organe presseur (59), dans lequel, pendant un déplacement relatif d'un panneau et de l'organe presseur (59) de façon que celui-ci se déplace le long d'un bord périphérique du panneau, la matière résineuse (55) extrudée et configurée est rendue solidaire du bord périphérique par l'organe presseur (59), et dans lequel une machine d'injection (14) est prévue du côté amont de la filière (56), et une matière résineuse (55), délivrée par l'intermédiaire d'une trémie de matière résineuse (11) de la machine d'injection (14), est introduite dans une chambre à piston (16) de celle-ci par une vis de dosage (9) suivant un certain débit, tandis qu'un débit d'injection de la matière résineuse (55) est régulé en réponse à une vitesse de déplacement relatif entre un bord périphérique du panneau et la filière (56), la matière résineuse (55) introduite dans la chambre à piston (16) est injectée vers la filière (56) par un piston (17) pour être extrudée sur le bord périphérique du panneau à travers l'ajutage de la filière (56), pour qu'ainsi, au moment du passage d'une partie du panneau tournée vers l'organe presseur (59), d'un côté à un coin dudit panneau, la vitesse de déplacement relatif entre le panneau et l'organe presseur (59) soit réduite, et qu'une vitesse de déplacement du piston (17) soit réduite en réponse à la réduction de la vitesse de déplacement relatif, afin de diminuer un débit de sortie de l'ajutage (7) par unité de temps, et qu'au moment du passage de la partie du panneau tournée vers l'organe presseur (59), du coin à un autre côté du panneau, la vitesse de déplacement relatif entre le panneau et l'organe presseur (59) soit augmentée, et que la vitesse de déplacement du piston (17) soit augmentée en réponse à l'augmentation de la vitesse de déplacement relatif, afin d'augmenter le débit de sortie de l'ajutage (7) par unité de temps.

4. Procédé pour préparer un panneau comportant un cadre en résine selon la revendication 3, dans lequel un dispositif régulateur de débit de matière résineuse (21) est prévu entre la machine d'injection (14) et l'ajutage (7), le dispositif régulateur de débit de matière résineuse (21) servant à empêcher une décharge excessive en réponse à la vitesse de déplacement relatif entre le panneau et l'organe presseur (59).
